# EUROPÄISCHE PATENTANMELDUNG

(11) **EP 1 986 169 A1**
(43) Veröffentlichungstag der Anmeldung: **29.10.2008**
(21) Anmeldenummer: 07090090.7
(22) Anmeldetag: 27.04.2007
(51) Int. Cl.: G08G 1/00

(54) **System oder Verfahren zur spontanen Vermittlung und/oder Überwachung von Reisenden innerhalb eines Mitfahr-/Verkehrssystems**

(71) Anmelder: CytoCar AG, 10785 Berlin (DE)
(72) Erfinder: Klein, Thomas, 14482 Potsdam (DE)
(74) Vertreter: Boeckh, Tobias

(57) **Zusammenfassung**

Die Erfindung betrifft ein Verfahren und ein System zur Vermittlung und Überwachung von Reisenden und oder Transportgütern sowie ein System zur Speicherung von Daten für gemeinsame Fahrten von Anbietern einer Fahrt/Reise und einem oder mehreren Mitfahrern oder Gütern.

## Beschreibung

Die Erfindung betrifft ein Verfahren und ein System zur Vermittlung und Überwachung von Reisenden und oder Transportgütern sowie ein System zur Speicherung von Daten für gemeinsame Fahrten von Anbietern einer Fahrt/Reise und einem oder mehreren Mitfahrern oder Gütern.

In den letzten Jahren haben sich verschiedene Systeme und Verfahren/Methoden herausgebildet, die die Kontaktanbahnung zwischen Anbietern einer Mitfahrgelegenheit mit Mitfahrern ermöglichen sollen.

Zum einen ist es angesichts der zunehmenden Verkehrsdichte wünschenswert, die vorhandenen Transportkapazitäten im Berufs- und Kurzpendelverkehr effizient zu gestalten. Zum anderen ist auch der Fernverkehr durch Bahn oder Flugreisen vom Kosten-/Leistungsverhältnis noch nicht so organisiert, dass sich für alle potentiellen Reisenden die Möglichkeit ergibt, die entsprechenden Dienste im gewünschten Umfang in Anspruch zu nehmen. Eine Möglichkeit, um diese Nachteile zu umgehen, ist das sogenannte Trampen. Die zunehmende Entfremdung, bauliche Veränderungen v. a. an Schnellstraßen und das steigende Sicherheitsbedürfnis innerhalb von mobilen Gesellschaften, insbesondere Massengesellschaften, führt aber dazu, dass Fahrer von privaten oder kommerziellen PKWs oder LKWs nur ungern ihnen an sich unbekannte Mitfahrer/Fahrgäste oder Transportgüter mitnehmen.

Dies hat seine Ursache im Wesentlichen darin, dass die Halter bzw. Fahrer der Kraftfahrzeuge keine ausreichenden Informationen über die möglichen Mitfahrer haben, die ihrem Sicherheitsbedürfnis genügen würde. Dies gilt aber auch umgekehrt dergestalt, dass zahlreiche potentielle Reisende/Mitfahrer aufgrund ähnlicher Sicherheitsbedenken auf die kostengünstige und umweltverträgliche Möglichkeit des Mitfahrens in fremden PKWs oder LKWs verzichten. Um die Nachteile der bisherigen Form des Trampens zu beseitigen, wurden Leitstellen beispielsweise in Form von Mitfahrzentralen etabliert, die Reisende/Mitfahrer und Fahrzeughalter bzw. Fahrer vermitteln sollen.

Weitere Formen der bekannten Leitstellen sind die sogenannten Dispatcher in Taxiunternehmen oder ähnliche Einrichtungen.

Weiterhin sind insbesondere in Ballungsräumen Leitzentralen bekannt, die auf der Vernetzung einer Internet- oder einer Handy-Struktur beruhen. Über derartige Strukturen - beispielsweise über Versenden einer E-Mail oder einer SMS - kündigt der Mitfahrer bzw. der Anbieter einer Reise mehrere Tage vor dem geplanten Termin die Reise an, so dass Fahrer und Mitfahrer sich absprechen und eine Mitfahrgelegenheit vereinbaren können. Selbstverständlich ist es möglich, das Anbieten einer Reise oder das Nachfragen einer solchen, zentral zu sammeln und auf einer Internet- oder Handyplattform für mehrere Interessenten bereitzustellen.

Nachteilhafterweise können die bekannten Leitstellen Nachfrage und Angebot nicht so übersichtlich effizient und zügig koordinieren, dass diese sich durchgesetzt hätten.

Der Erfindung liegt die Aufgabe zugrunde, ein Verfahren und ein System zur Vermittlung von Angeboten und Nachfragen von Mitfahrgelegenheiten bereitzustellen, das eine übersichtliche, zuverlässige und effiziente sowie spontane Vermittlung gestattet.

Erfindungsgemäß wird die Aufgabe durch ein Verfahren und System mit den Merkmalen der Ansprüche gelöst.

Vorteilhafte Ausgestaltung und Vorzugsvarianten der Erfindung ergeben sich insbesondere aus den Unteransprüchen. Die Erfindung betrifft gemäß der Ansprüche ein Verfahren/System und weiterhin auch eine Vorrichtung mit Software, welche die Vermittlung insbesondere von spontanen Mitfahrwünschen und mit spontanen Mitfahrangeboten leistet und somit ein Verfahren und ein neues Verkehrssystem direkt für die Straße darstellt.

Die Erfindung wird über das Prinzip der sogenannten Bahnhöfe (im Sinne der Erfindung: ortsfeste Mittel) realisiert. Hierbei erwirbt ein Fahrgast an einem festgelegten Ort (= Station, Bahnhof, z.B. Tankstelle) mit Fahrkartenschalter oder Automat eine Fahrkarte und kann auf einer vorher bestimmten Streckte in einer vorher festgelegten Zeit für Abreise und Ankunft von A nach B gelangen.

Der Mitfahrer bzw. Fahrgast ist hierbei auf wenige Orte (die sogenannten Bahnhöfe) und definierter oder undefinierter Abfahrtszeiten festgelegt. Innerhalb des individuellen Autoverkehrs kann der Besitzer eines Kraftfahrzeuges spontan entscheiden, auf welchem Weg und in welcher Zeit er bis zu welchem Zeitpunkt von A nach B fahren will. Die einzige Beschränkung seiner individuellen Entscheidung erfolgt durch die Notwendigkeit, Kraftstoffe für das Fahrzeug zu tanken. Hierbei muss er vorbestimmte Orte, wie insbesondere Tankstellen anfahren, die im Sinne der Erfindung als Bahnhöfe definiert werden können. Der Fahrer eines Kraftfahrzeuges hat die Auswahl unter vielen solcher vorbestimmter Orte (= Tankstellen) zu wählen und er ist grundsätzlich auch in seiner Zeiteinteilung frei.

Die Erfindung nutzt also bekannte Treffpunkte von Fahrern und potentiellen Reisenden wie Tankstellen und Schnellrestaurants als Treffpunkt (Stationen, Bahnhöfe) und erlaubt spontane Mitfahrangebote und -nachfragen gegen Kostenbeteiligung zu vermitteln. D.h. im Gegensatz zu dem Good-Will-System des Autostopps/Trampen basiert das erfindungsgemäße Verfahren und System auf dem Prinzip der Kostenbeteiligung. Ein Mitfahrer/Käufer kann beispielsweise in einer bevorzugten Ausführungsform der Erfindung an einem Treffpunkt, wie einer Tankstelle, an der Kasse oder über einen Automaten eine Fahrkarte für ein zunächst völlig virtuelles Fahrzeug für die Strecke von A nach B erwerben. Nach Erwerb der Fahrkarte wartet der Mitfahrer/Käufer an dem Treffpunkt/Tankstelle auf den Fahrer, der in diesem Falle als Verkäufer auftritt. Ein bereitgestelltes System informiert innerhalb des Verfahrens mit dem Kauf dieser Fahrkarte mögliche Fahrer als Anbieter über das gewünschte Fahrtziel des Verkäufers und dessen Standort, vorteilhafterweise durch Informationen an dem Treffpunkt oder anderen geeigneten Orten, wie anderen Tankstellen, Informationstafeln oder Verkehrsknotenpunkten oder aber über ein Signal an ein an das System eingebuchte Mobiltelefone von Fahrern, wobei das System die Anwendung zum Downloaden zur Verfügung stellen kann oder aber das Signal an in das System eingebuchte Navigationssysteme (PNA) im Kraftfahrzeug (RDS / TMC)oder auf dem Navi-/Mobiltelefon des Fahrers, wobei das System wiederum bevorzugt die Anwendung zum Downloaden und installieren zur Verfügung stellt.

Die Information über das gewünschte Fahrtziel kann aber auch vor dem Passieren des Treffpunktes über RFID-Chips vermittelt werden. Innerhalb des Verfahrens erfolgt die Informationsvermittlung über die Kombination von bekannten Bahnhöfen, wie Tankstellen, Mobiltelekommunikation und GPS, die über client Funktionen des Mobiltelefons oder über RDS / TMC des navigationssystems in das System eingebunden sind, wobei sich die Informationen auf die interessierten Fahrer konzentrieren, die räumlich und hinsichtlich ihrer Fahrtziele von Interesse sind, womit eine ausreichende Angebots-/Nachfrage-Deckung erreicht wird.

Der Fahrer kann sich spontan entscheiden, den Mitfahrer mitzunehmen, indem er direkt an der Tankstelle auf den Käufer zugeht oder durch das Signal geleitet die betreffende Tankstelle ansteuert bzw. über sein Navi, Handy die Bereitschaft signalisiert, den Mitfahrer mitzunehmen.

Das Anwortsignal des Fahrers wird über den gleichen Weg wie das Signal des Mitfahrwunsches zurückgesendet und kann direkt an den Mitfahrer übermittelt werden, sofern er im Zusammenhang mit dem Kauf eines Fahrscheins sein Mobiltelefon für das System aktiviert hat oder das System zeigt im Wartebereich der Station das Eintreffen mit erwarteter Ankunftszeit und Ziel (über Navi des Fahrzeugs) des oder der antwortenden Fahrzeuge an.Insofern kann der oder die wartenden oder fahrenden möglicherweise unter verschiedenen mitfahrern oder Fahrzeugen zu verschiedneen Abfahrtszeiten auswählen.

Das System vergibt aber grundsätzlich nach dem Prinzip firstcome-first-serve Prioritäten oder auch Sondewünsche (z.B. Frauenfahrten)

Der Mitfahrer (Käufer) übergibt dem Fahrer (Anbieter) das Ticket, welches an der Tankstelle oder anderen Partnerorganisationen/Unternehmen gegen Waren oder Bargeld eingetauscht werden kann.

Das System beinhaltet mit dem Kauf einer Fahrkarte nicht nur den Kaufpreis für die Strecke, sondern in einer bevorzugten Ausführungsvariante auch eine Versicherung für Mitfahrer und Fahrer und es gewährleistet durch die übliche Videoüberwachung an Tankstellen eine erhöhte Sicherheit für das spontane Mitfahrsystem.

Das System bucht den Mitfahrwunsch aus der Informations- und Signalkette aus,
durch
- Rückgabe des Tickets durch den Mitfahrer (Käufer),
- Entwerten des Tickets bei Übergabe (Voucher)
- Eintauschen des Tickets gegen Waren/Bargeld durch den Fahrer (Anbieter),
- Verlassen des überwachten Bereichs der Tankstelle durch RFID-Technik im Ticket.

Dadurch ist gewährleistet, dass nur aktuelle Mitfahrwünsche über das System vermittelt werden.

Das System erkennt den Wunsch nach Umsteige-Stationen und informiert an diesen Punkten bzw. sendet Signale vorab oder sobald der Mitfahrer eintrifft (Mobilfunk/GPS/RFID -Technik kombiniert mit Client Funktionen).

Das System erlaubt es, statistische Daten für die Optimierung (Strecken, Tankstellen, Marketing) zu verarbeiten.

Das System kann unverbindliche Anmeldungen von Mitfahrern und Fahrern vorab über das Internet oder Mobilfunk aufnehmen und erstellt eine Potentialanalyse (datamining), die übers Internet oder im eingelockten Navi visualisiert wird bzw. kann auch konkret abgefragt werden. Damit können Fahrer und Mitfahrer spontan, kurz- oder langfristig kalkulieren und verbessern so die Funktionalität des Systems für spontane Entscheidungen (Wahrscheinlichkeitsrechnung). Dies beinhaltet auch die Anmeldung von regelmäßigen Fahrten (Kuriere, Pendler).

Das System erlaubt es dem Mitfahrer, sich vorab oder elektronisch verbindlich einzubuchen und seinen Mitfahrwunsch und Fahrtziel elektronisch zu übermitteln, ohne zunächst an eine Tankstelle gebunden zu sein

Fahrer, die mehrere Plätze haben (z.B. Busse mit Leerfahrten) und nicht an eine enge Streckenführung gebunden sind, können sich aktiv eine hinsichtlich der Mitfahrer optimierte Strecke mit einem hohen Potential auswählen lassen.

Das System kann während der Fahrt Fahrer zu Mitfahrern lotsen, die an verteilten Standorten warten.

Das System kann Rückmeldungen von Fahrern, die bereit sind, Mitfahrer aufzunehmen, an die betreffenden Treffpunkte melden, so dass über geeignete Informationen für die Treffpunkte eine Potentialanalyse und die mögliche Wartezeit errechnet werden kann.

Das System hat bei flächendeckenden Einsatz einen volkswirtschaftlichen Nutzen, weil es dem Individualverkehr eine neue Dimension gibt und die Nutzung der Ressourcen effektiver erlaubt (CO² verringern = Umweltschutzsystem).

Das System erlaubt es, auf den Tickets und über die RFID-Technik bzw. das Mobiltelefon Werbung bzw. Co-Marketing zu schalten.

Das System ist darauf angelegt, im Rahmen von Warenwirtschaftssystemen großer Konzerne zu funktionieren.

Es besteht selbstverständlich auch die Möglichkeit, vorab zu einem beliebigen Zeitpunkt an einer beliebigen Tankstelle einen Fahrschein für eine bestimmte Strecke von einer bestimmten Tankstelle zu einem bestimmten Ziel und zu einem eingegrenzten Abfahrtzeitpunkt zu kaufen. Das Verfahren/System bucht diesen bereits gekauften Fahrschein ein, wobei in einer bevorzugten Ausführungsform RFID für das Ticket entsprechend geladen ist. In der Potentialanalyse, die jeder Benutzer beispielsweise im Internet abrufen kann oder aber dies auf Handys und Navigationssysteme angezeigt wird, wird dieser Mitfahrwunsch entsprechend dargestellt.

## Patentansprüche

1. Verfahren/System für die Vermittlung von Mitfahrgelegenheiten und/oder Transport von Gütern mit mindestens einem ortsfesten Mittel zur Erlangung von Fahrkarten für eine vorher bestimmte Strecke zu einer vorher festgelegten Zeit und einer Vielzahl von Anbietern/Fahrern und Interessenten/Mitfahrern oder Gütern, wobei das System ein Kommunikationsmittel umfasst, die mindestens einen Informationsaustausch zwischen dem ortsfesten Mittel und dem Fahrer/Anbieter ermöglichen und das Verfahren/System ein zweites Mittel umfasst, welches das gewünschte Fahrtziel des Interessenten/Mitfahrers und dessen Standort angibt.

2. Verfahren/System nach dem vorhergehenden Anspruch **dadurch gekennzeichnet, dass**
das erste Mittel ein Fahrkartenschalter, ein Automat oder eine Verkaufseinrichtung in einer Tankstelle oder einem Restaurant ist.

3. Verfahren/System nach Anspruch 1 oder 2 **dadurch gekennzeichnet, dass**
das zweite Mittel eine Informationstafel, ein Signalgeber, ein Mobiltelefon, ein Navigationssystem oder ein Ablesegerät für Informationen aus einem RFID-Chip, bevorzugt in einer Fahrkarte, ist.

4. Verfahren/System nach einem der vorhergehenden Ansprüche **dadurch gekennzeichnet, dass**
die angegebene Nachfrage eines Mitfahrers Start- und Zielort und zusätzlich die Routenangaben, sowie den Fahrkartenpreis umfassen.

5. Verfahren/System nach einem der vorhergehenden Ansprüche **dadurch gekennzeichnet, dass**
die Angebote mehrerer Fahrer kombiniert werden, um einem Mitfahrer eine durchgehende Route von einem Ausgangspunkt zu einem Zielort anzubieten.

6. Verfahren/System nach einem der vorhergehenden Ansprüche **dadurch gekennzeichnet, dass**
mit der Übermittlung eines Fahrwunsches auch die Identitätsdaten des Mitfahrers übermittelt werden, ggf. nach einer Überprüfung dieser.

7. Verfahren/System nach einem der vorhergehenden Ansprüche **dadurch gekennzeichnet, dass**
es ein weiteres Mittel zur Erfassung der Identitäten mindestens des Mitfahrers und/oder des Fahrers aufweist und/oder ein zusätzliches Mittel zur gemeinsamen Speicherung der erfassten Identitätsdaten in einem elektronischen Speicher und/oder ggf. ein weiteres Mittel zur Erfassung der vom Mitfahrer zu tragenden Fahrtkosten und/oder ggf. ein weiteres Mittel zur automatischen Buchung der erfassten Fahrtkosten.

8. Verfahren/System nach einem der vorhergehenden Ansprüche **dadurch gekennzeichnet, dass**
zur Übermittlung der Daten an sich bekannte Protokolle zum Datenaustausch im Mobilfunknetzen eingesetzt werden, insbesondere SMS, MMS, E-Mail, WAP und funktionsanaloge Protokolle.

9. Verfahren/System nach einem der vorhergehenden Ansprüche **dadurch gekennzeichnet, dass**
zusätzlich noch die Anzahl der Mitfahrgelegenheiten in einer zentralen Leitstelle aufzeichnet werden.

10. Verfahren/System nach einem der vorhergehenden Ansprüche **dadurch gekennzeichnet, dass** die Leitstelle eine Übermittlung an ein Telefongerät eines Anbieters zur Bestätigung eines Angebots und/oder einer Nachfrage übermittelt.
